Europäisches Patentamt

European Patent Office

Office européen des brevets

(19)

(11) Veröffentlichungsnummer: **0 004 657**
**B1**

(12) **EUROPÄISCHE PATENTSCHRIFT**

(45) Veröffentlichungstag der Patentschrift: 07.04.82

(51) Int. Cl.³: **H 04 N 5/78**

(21) Anmeldenummer: **79100997.0**

(22) Anmeldetag: **31.03.79**

(54) Verfahren zur Aufzeichnung von unterbrochenen Videoszenen und Anordnung zur Durchführung des Verfahrens.

(30) Priorität: **04.04.78 US 893456**

(43) Veröffentlichungstag der Anmeldung:
**17.10.79 Patentblatt 79/21**

(45) Bekanntmachung des Hinweises auf die Patenterteilung:
**07.04.82 Patentblatt 82/14**

(84) Benannte Vertragsstaaten:
**BE CH DE FR GB NL SE**

(56) Entgegenhaltungen:
**DE - A - 2 337 619**
**DE - B - 1 762 922**
**US - A - 3 051 777**
**US - A - 3 878 557**
**US - A - 3 959 818**
**US - A - 4 001 882**

(73) Patentinhaber: **BASF Aktiengesellschaft**
**Carl-Bosch-Strasse 38**
**D-6700 Ludwigshafen (DE)**

(72) Erfinder: **Rotter, Gerhard, Dr.**
**25692 Cervantes Lane**
**Mission Viejo, Calif. 92675 (US)**

Courier Press, Leamington Spa, England.

**0 004 657**

### Verfahren zur Aufzeichnung von unterbrochenen Videoszenen und Anordnung zur Durchführung des Verfahrens

Die Erfindung betrifft ein Verfahren und eine Anordnung zur Aufzeichnung von Videosignalen mit einem Videorekorder, in dem in Längsspuren auf Magnetband aufgezeichnet wird und nach Durchlauf einer ersten Spur in einer Richtung der Bandtransport bis zum Stillstand verzögert und in Gegenrichtung wieder beschleunigt wird, wobei eine Folge von zeitlich beabstandeten Video-Szenen vorliegt, die von einer Videosignalquelle, insbesondere einer Videokamera, stammen, und die aufgezeichneten Videosignale ohne Bandkapazitätsund Synchronisationsverlust wiedergebbar sein sollen, durchgeführt mit folgenden Verfahrensschritten:

Verzögern des Bandtransports bis um Stillstand des Bandes nach erfolgter Aufzeichnung einer Szene in der dazugehörigen Bandtransportrichtung; Zurücksetzen des Bandes un eine vorbestimmte Strecke; Beschleunigen des Bandtransports auf Aufzeichnungsgeschwindigkeit in der dazugehörigen Bandtransportrichtung; Abtasten der Horizontal- und Vertikal-Synchronisiersignale vom Band; Synchronisieren des Bandtransports in Abhängigkeit von den vom Band abgetasteten Horizontal-Synchronisiersignalen mit den Bezugs-Horizontal-Synchronisiersignalen durch Phasenvergleich beider Synchronisiersignale; Synchronisierung der Vertikal-Synchronisiersignale vom Band mit denen der Videosingalquelle; Umschalten der Aufzeichnungseinrichtung in den Betriebszustand zur Aufzeichnung der nächstfolgenden Szene, Erfassen der Istdrehzahl des Bandtransports über ein Tachosignal.

Wird ein Video-Bandaufzeichnungsgerät dazu verwendet, Fernsehprogramme aufzuzeichnen, so läuft es üblicherweise während vergleichsweise langer, ununterbrochener Zeitperioden im Aufzeichnungsbetrieb. Überdies wird ein zur Aufzeichnung von Fernsehprogrammen ein gesetztes Magnetbandgerät nur selten im Wiedergabebetrieb arbeiten, derart, daß zwei oder mehr aufgezeichnete Programmsegmente ohne Anhalten des Bandes wiedergegeben werden. Wird das Videobandgerät andererseits mit einer Videokamera, also sozusagen im "Heimkino"-Betrieb verwendet, dann wird das Bandgerät häufig gestartet und gestoppt, und die Länge der aufgezeichneten Szene wird normalerweise nur wenige Sekunden betragen.

Bandlaufwerke, wie sie in Video-Bandaufzeichnungseinrichtungen verwendet werden, erfordern eine relativ große Zeitdauer, um das Band auf Aufzeichnungsgeschwindigkeit zu beschleunigen und um das Band beim Anhalten der Aufzeichnung zu verzögern. Wird das Band lediglich am Ende der Aufzeichnung einer Szene verzögert und zu Beginn der Aufzeichnung der nächsten Szene wieder beschleunigt, dann würden die auf dem Band aufgezeichneten Zeilen- und Bildsynchronisiersignale mit der Videoinformation ungleichmäßig über das Band verteilt werden. Sogar dann, wenn die Aufzeichnung während der Bandbeschleunigung und -verzögerung unterdrückt würde, müßten sich zwangsläufig in der Aufeinanderfolge der Synchronisierimpulse bedeutende Ungleichmäßigkeiten ergeben. Wenn ein solches Band mit voller Geschwindigkeit zurückgespielt wird, geht die Synchronisierung im wiedergegebenen Bild zeitweise verloren und bei jedem Szenenwechsel tritt folglich ein "Bilddurchlaufen" ein. Wenn die Szenen nur etwa wenige Sekunden lang sind, werden die häufigen Synchronisationsfehler und -verluste vom Betrachter dauernd als eine Quelle der Störung und des Ärgers ampfunden.

Bie Videobandgeräten mit Schrägspurabtastung (nach dem Helical-Scan-Prinzip) wurde das oben umrissene Problem durch Bandrücksetzen nach Vollendung der Aufzeichnung einer Szene gelöst, dabei wird zu Beginn der Aufzeichnung der nächsten Szene die Kamera mit den am Ende der vorigen Szene aufgezeichneten Videosignalen Synchronisiert, bevor wieder auf Aufziechnungsbetrieb umgeschaltet wird. Bei Schrägabtast-Videobandgeräten werden jedoch bis zu fünf oder sechs Sekunden dazu benötigt, das Bandlaufwerk auf Aufzeichnungsgeschwindigkeit hochzufahren und auf die vom Band erhaltenen Synchronisiersignale einrasten zu lassen. Die Synchronisiersignale sind dabei separat neben den Videosoginalen in Synchronisierspuren aufgezeichnet. Eine Verzögerung derart langer Dauer ist offenbar unannehmbar, da ja die Szene selbst meistens nicht viel länger als die Verzögerungsperiode ist.

Aus der DE—OS 23 37 619 ist ein solches Helical-Scan-Gerät bekannt, in dem jedoch eine separate Steuerspur mit speziellen Steuersignalen zur Regelung der Drehgeschwindigkeit des Magnetkopfes benutzt wird. Die Steuersignale werden über einen zusätzlichen Kopf abgetastet, und sie bestehen aus dem Vertikalsteuersignal zugeordneten Bezugssignalen.

Ein solches Drehkopf-Aufzeichnungsgerät unterscheidet sich wesentlich von einem Videorekorder vom sogenannten Schnell-laufertyp mit Längsspuren auf dem Band und ständiger Laufrichtungsumkehr des Bandes.

Die Aufgabe der vorliegenden Erfindung besteht somit darin, Verfahren und Anordnungen zur Video-Bandaufzeichnung auf einem Schnelläufer-Magnetbandgerät bereitzustellen, wobei die Aufzeichnung von zusätzlichen Steuersignalen vermieden — also Bandkapazität gespart und eine möglichst lückenlose Aneinanderreihung von Alt- und Neuszenen erreicht werden soll, bei möglichst schneller Synchronisation von Rekorder und Videosignalquelle zum Beginn der Neuaufzeichnung.

Mit der vorliegenden Erfindung wird die Aufgabe mit einem Verfahren zur Aufzeichnung von Videosignalen mit einem Videorekorder gemäß Einleitung gelöst, wenn die Schritte Verzögern des Bandtransports zum Stillstand und Beschleunigung in Gegenrichtung durch Erzeugen eines frequenzvariablen Signals erfolgen, das beim Beschleunigen aus dem Stillstand zwischen einem Mindest- und

0 004 657

einem Höchstfrequenzwert erhöht und beim Verzögern entsprechend vermindert wird, und daß über das frequenzvariable Signal durch Phasenvergleichen mit dem vom Bandtransport erzeugten Tachosignal und Regeln der Bandtransportgeschwindigkeit über das Differenzsignal eine vom frequenzvariablen Signal abhängige Bandtransportgeschwindigkeit eingestellt wird.

Die Erfindung betrifft ein Verfahren und geeignete Anordnungen zur Aufziechnung aufeinanderfolgender, zeitlich getrennter Szenen in einem Videobandgerät mit Längsspuraufzeichnung. Bei derartigen Videobandgeräten läuft das Band mit relativ hoher Geschwindigkeit an einem stationären Aufzeichnungs-/Wiedergabekopf vorbei und nicht mit vergleichsweise langsamerer Bandtransportgeschwindigkeit, infolge der sehr schnellen Rotation eines oder mehrerer Köpfe in einem Schrägspur-Bandgerät. Prinzipiell umfaßt das Verfahren der Erfindung die oben aufgeführten Schritte der Verzögerung des Bandes bis zu einem Stillstand nach beendeter Aufzeichnung einer ersten Szene in einer ursprünglichen, Bandtransportrichtung, der Beschleunigung des Bandes in der entgegengesetzten Richtung bis zum Erreichen der Soll-Aufzeichnungsgeschwindigkeit des Bandtransports mit relativ hoher Geschwindigkeit in der entgegengesetzten Richtung inner-halb eines bestimmten Zeitraums und der Wiederverzögerung des Bandes bis zum Stillstand. Bei der Aufzeichnung einer zweiten Szene beschleunigt der Bandtransport in der ursprünglichen Richtung bis die Soll-Aufzeichnungsgeschwindigkeit des Bandes erreicht ist und Synchronisierimpulse werden vom Band abgelesen und dazu verwendet, den Betrieb einer Videosingalquelle, insbesondere einer Videokamera, zu synchronisieren, bevor das Bandgerät wiederum in den Aufzeichnungsbetrieb geschaltet wird. Die Schritte der Bandbeschleunigung bis zur Aufzeichnungsgeschwindigkeit und des Einrastens auf die vom Band wiedergegebenen Synchronisiersignale nehmen lediglich einige 100 Millisekunden in Anspruch. Diese Verzögerung wird vom Benutzer des Systems kaum wahrgenommen und der Verlust an Information vom Einschalten der Kamera bis der eigentliche Aufzeichnungsvorgang beginnt wird sehr klein gehalten.

Ein weiteres erfindungsgemäßes Verfahrensmerkmal wird darin gesehen, daß das Synchronisieren des Bandtransports die Rückstellung der Vertikal-Synchronimpulse der Videosignalquelle, insbesondere einer Kamera umfaßt, damit letztere mit den vom Band abgetasteten Vertikal-Synchronisierimpulsen in Übereinstimmung kommen.

Zweckmäßig erfolgt das Einschalten des Videorekorders in den Aufzeichnungsbetrieb erst, wenn die aufzuzeichnende Video-Szene mit der zuletzt aufgezeichneten Video-Szene in Synchronisation ist.

Die anordnung zur Durchführung der oben erläuterten Verfahrensschritte enthält eine Transporteinrichtung zum Längstransport des Bandes entlang einem Aufzeichnungs-/Wiedergabemagnetkopf, die einen Antriebsmotor und Motordrehzahl-Regeleinrichtungen aufweist, um die Motor-und Bandgeschwindigkeit in Abhängigkeit von Bezugssignalen zu regeln, und ist gekennzeichnet durch folgende Schaltungen: Gerätesteuereinrichtungen für die Bandtransporteinrichtung, die Motordrehzahl-Regeleinrichtung und für die Bereitstellung geeigneter Oszillatorsignale für die Motordrehzahl-Regeleinrichtung, damit die Schritte Verzögern und Rücksetzen des Bandes am Aufzeichnungsende einer Szene und zum Bescheunigen am Aufzeichnungsbeginn der nächstfolgenden Szene gesteuert werden, Einrichtungen um die Synchronisiersignale vom Band zu erhalten, Gleichlaufeinrichtungen zur Synchronisierung der Bandtransporteinrichtung mit den Synchronisiersignalen der Videosignalquelle, mittels der vom Band erhaltenen Synchronisiersignale sowie Schalteinrichtungen, die über die Gerätesteuereinrichtungen gesteuert werden, zum Schalten in den Aufzeichnungsbetrieb, wenn der Bandtransport mit der Videosignalquelle voll synchronisiert ist.

Kurz gesagt erhält die Anordnung Einrichtungen zum Stoppen und zum Zurücksetzen des Bandes nach Abschalten der Videosignalquelle, z.B. der Kamera, am Ende einer Szene. Einrichtungen zum Beschleunigen des Bandes auf Aufzeichnungsgeschwindigkeit nach Betätigung der Kamera für die Aufziechnung der nächsten Szene und Gleichlaufeinrichtungen zur Synchronisierung des Aufzeichnungssystems und der Kamera mit vom Band abgelesenen Synchronisiersignalen, bevor das Videobandgerät über Schalteinrichtungen in den Aufzeichnungsbetrieb umgeschaltet und die nächstfolgende Szene aufgezeichnet wird.

Erfindungsgemäß enthalten die Gleichlaufeinrichtungen folgende Einheiten: eine Vergleichsschaltung zum Vergleich der vom Band erhaltenen Horizontal-Synchronisisersignale mit den durch eine unabhängige Bezugsfrequenz erzeugten und der Steuerung der Videosignalquelle dienenden Horizontal-Synchronisiersignalen und nachstell-Einrichtungen, die bei Erfassen eines vom Band abgetasteten Vertikal-Synchronisiersignals die Vertikal-Synchronisation der Videosignalquelle nachstellen.

Praktisch umfassen die Motordrehzahl-Regeleinrichtungen: einen Rückkopplungskreis, der einen mit dem Motor gekoppelten Tachometer, einen Phasenvergleicher zum Vergleichen des Oszillatorsignals mit einem vom Tachometer erzeugten Signal und zum Erzeugen eines Differenzsignals, und eine Motorsteuerstufe zur Steuerung der Motordrehzahl in Abhängigkeit vom Differenzsignal enthält.

In der erfindungsgemäßen Anordnung wird zweckmäßig während der Schritte Beschleunigen und Verzögern das dem Phasenvergleicher zugeführte Oszillatorsignal von der Gerätesteuereinrichtung geliefert und das Oszillatorsignal wird im Aufzeichnungsbetrieb von einer Bezugsfrequenz und im Wiedergabebetrieb von der Vergleichsschaltung für die Horizontal-Synchronisiersignale abgeleitet.

In schaltungsmäßig günstiger Ausbildung enthält die Vergleichsschaltung für die Horizontal-

3

Synchronisiersignale einen zweiten Phasenvergleicher, der ein Differenzsignal aus dem Phasenvergleich bereitstellt, und es ist ein variabler Oszillator zur Erzeugung eines Oszillatorsignals vorgesehen, das zum Teil von letzterem Differenzsignal abhängig ist.

Aus obigen Ausführungen geht hervor, daß die vorliegende Erfindung ein Video-Aufzeichnungsverfahren und eine Anordnung bereitstellt, bei denen die Synchronisierung zwischen aufeinanderfolgend aufzuzeichnenden, jedoch ursprünglich zeitlich getrennten Szenen erreicht wird, ohne daß der Aufzeichnung jeder Szene eine mehr als unbedingt notwendig lange Verzögerungszeit vorausgehen muß. Weitere Gesichtspunkte und Vorteile der Erfindung sind aus nachfolgender, ausführlicher Beschreibung eines Ausführungsbeispiels in Verbindung mit den beigefügten Zeichnungen ersichtlich.

Figur 1 ist ein Prinzipschaltbild in vereinfachter Darstellung, das eine erfindungsgemäße Anordnung mit Teilen eines Video-Bandgeräts für Längsspuraufzeichnung in Verbindung mit einer Videokamera zeigt,

Figur 2 ist ein Bandgeschwindigkeits-/Bandlagediagramm, das den Bandtransport gemäß der Erfindung verdeutlicht und

Figur 3 ist ein Flußdiagramm, das die Folge der erfindungsgemäßen durchgeführten Maßnahmen und Funktionen aufzeigt, insbesondere die Funktionen der Gerätesteuereinrichtung gemäß Figur 1.

Ein Verfahren zur Aufzeichnung mehrfacher, zeitlich getrennter Szenenfolgen in einem Video-Bandaufzeichnungssystem wird beschrieben, womit die Szenen sich aneinandergereiht aufgezeichnet ohne jegliche Synchronisationsfehler oder -verluste wiedergeben lassen. Dieses Ziel wird in einer Aufzeichnungseinrichtung mit Längsspuraufzeichnung erstens durch Rücksetzen des Bandes am Ende jeder aufgezeichneten Szene und zweitens vor dem Aufzeichnungsbeginn der nächstfolgenden Szene, durch einen äußerst schnell durchgeführten Synchronisiervorgang des Aufzeichnungssystems mit den vom Band erhaltenen Synchronisiersignalen erreicht.

In solchen Video-Längsspuraufzeichnungssystemen bewegt sich das Band relativ schnell in Bezug auf einen Aufzeichnungs-/Wiedergabekopf und nicht mit sehr viel geringerer Geschwindigkeit an einem oder mehreren schnell rotierenden Wandlern wie bei Helical-Scan-Geräten vorbei. Um auf einem Längsspurband eine ausreichend große Aufzeichnungszeit zu erzielen, ist üblicherweise eine Anzahl von mehreren Längsaufzeichnungsspuren über die Bandbreite verteilt. Sobald der kopf das Bandende erreicht hat, erfolgt eine Umkehr der Bandtransportrichtung, und der Aufzeichnungskopf wird entsprechend in eine neue Spurposition umgeschaltet.

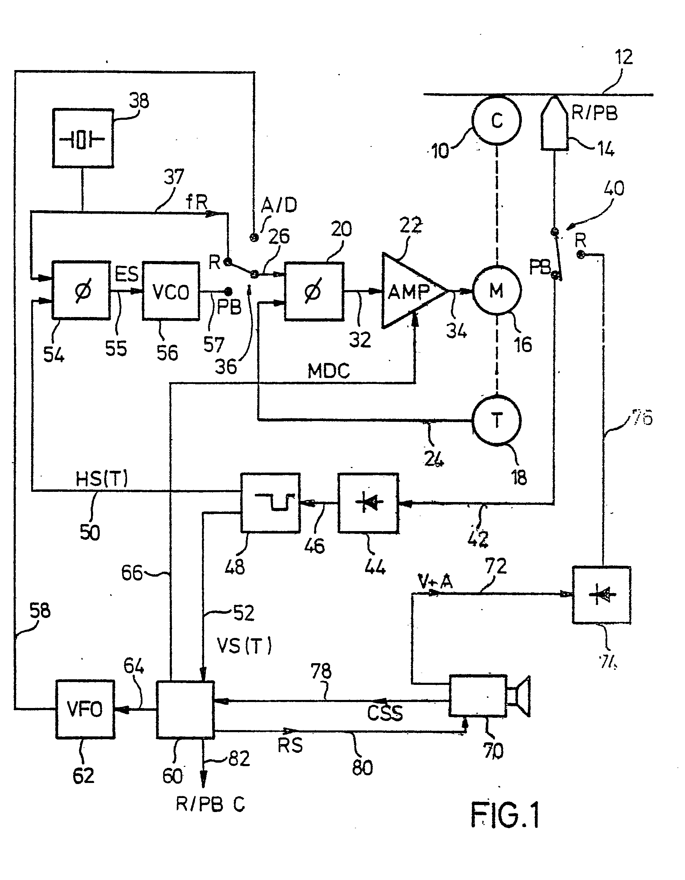

Wie Figur 1 zeigt, enthält ein derartiges Längsspuraufzeichnungs-Bandsystem eine Antriebsrolle (C), Bezugsnummer 10, die ein Band 12, insbesondere ein Magnetband, an einem Aufzeichnungs-/Wiedergabekopf (R/PB), 14, vorbeiführt.

Die Antriebsrolle 10 ist mechanisch an einen Antriebsmotor 16 (M) gekoppelt, an dem ferner ein Tachometer 18 (T) zum genauen Feststellen der Motordrehzahl angeschlossen ist.

Es wird vorausgesetzt, daß die Geschwindigkeit des Bandes 12 im Bezug auf den Wandlerkopf 14 genau geregelt ist, sowohl während der Aufzeichnung als auch während der Wiedergabe der Videoinformation. Eine Reihe verschiedener Methoden läßt sich zur Drehzahlregelung des Motors 16 anwenden, doch wird der Motor hier zum Zweck der Erläuterung hauptsächlich über eine Servoschleife geregelt, die einen Tachometer 18, einen Phasenvergleicher 20 und einen Steuerverstärker 22 für den Motor enthält. Der Tachometer 18 erzeugt Impulse mit Zeilenfrequenz ($f_R$), wenn das Band mit Soll-Geschwindigkeit transportiert wird. Diese Impulse werden über die Leitung 24 einem Eingang des Phasenvergleichers 20 zugeführt, während dessen anderer Eingang auf Leitung 26 ein der Bezugsfrequenz entsprechendes Signal empfängt. Der Ausgang des Phasenvergleichers 20 ist über Leitung 32 mit dem Steuerverstärker 22 für den Motor verbunden, dessen Ausgang über Leitung 34 dem Motor 16 zugeführt ist. Man sieht, daß bei Erfassung einer Phasendifferenz zwischen den vom Tachometer 18 erzeugten Impulsen (Leitung 24) und den über Leitung 26 mit Bezugsfrequenz ($f_R$) gelieferten Impulsen durch den Phasenvergleicher 20 ein Differenzsignal erzeugt wird, das dazu dient, über den Steuerverstärker 22 den Motor schneller oder langsamer zu steuern, bis die auftretende Phasendifferenz zu Null wird. Die Regelschleife mit dem Tachometer 18 bewirkt also, daß die Motordrehzahl auf die auf Leitung 26 gelieferte Bezugsfrequenz einrastet.

Wie Figur 1 zeigt, ist die Leitung 26 mit dem beweglichen Kontaktpol eines Dreiwegschalters 36 verbunden der eine "Aufziechnungs"-(R)-Stellung, eine "Wiedergabe"-(PB)-Stellung und eine Beschleunigungs-Verzögerungs-(A/D)-Stellung einnehmen kann. In der "Aufzeichnungs"-Stellung legt der Schalter 18 die Leitung 26 an die Leitung 37, auf der ein Bezugssignal ($f_R$) mit der gewünschten Zeilenfrequenz ($f_R$) geliefert wird, das von einem quarzgesteuerten Impulsgenerator 38 stammt. Im Aufzeichnungsbetrieb ist also die Bandgeschwindigkeit über die oben erwähnte Regelschleife mit der Bezugsfrequenz verriegelt.

Im Wiedergabebetrieb wird eine zusätzliche Regelschleife wirksam, um den Motor 16 mit den vom Band 12 abgetasteten Synchronisiersignalen zu synchronisieren. Genauer werden die Horizontal-Synchronisiersignale vom Band 12 mittels des Aufzeichnungs-/Wiedergabekopfes, 14 abgetastet, der mit dem beweglichen Kontaktpol eines einpoligen Umschalters 40 verbunden ist, der eine Aufzeichnungs- und eine Wiedergabestellung (R bzw. PB) einnehmen kann. In der Wiedergabestellung PB wird das Signal vom Wandlerkopf 14 über Leitung 42 an eine Demodulator 44 gelegt, wo es

# 0 004 657

demoduliert wird, so daß auf dessen Ausgangsleitung 46 ein Basisband-Videosignalgemisch erhalten wird. Über die Leitung 46 wird das Basisbandsignal einem üblichen Impulsabtrenner 48 zugeführt, der vom Basisbandsignal die Horizontal- und Vertikal-Synchronisiersignale HS(T) bzw. VS(T) abtrennt, wobei erstere, HS(T), auf Leitung 50 und letztere, VS(T), auf Leitung 52 abgegeben werden. Die Horizontal-Synchronisiersignale HS(T) der Leitung 50 werden einem zweiten Phasenvergleicher 54 zugeführt, dessen anderer Eingang wiederum das auf Leitung 37 vom Impulsgenerator 38 gelieferte Bezugssignal zugeführt erhält. Der zweite Phasenvergleicher 54 erzeugt ein Differenzsignal oder Fehlersignal (ES) auf Leitung 55, das dazu dient, die Frequenz eines spannungsabhängigen Oszillators 56 zu steuern, wobei der Oszillatorausgang über Leitung 57 an den Wiedergabekontakt (PB) des Dreiwegschalters 36 gelegt wird. Im Wiedergabebetrieb werden also die vom Band gewonnenen Synchronisiersignale mit den Bezugsfrequenzsignalen im Phasenvergleicher 54 verglichen, und der spannungsabhängige Oszillator 56 erzeugt Impulse geeigneter Freuqenz, um den Bandtransport über den Motor im Gleichlauf mit der Bezugsfrequenz ($f_R$) der Leitung 37 anzutreiben.

Zum Zweck der Geschwindigkeitsregelung während der Beschleunigung und Verzögerung wird das Bezugssignal auf Leitung 26 über die Leitung 58 von der Gerätesteuereinrichtung 60 her geliefert. Die Frequenz dieses Signals läßt sich in der Steuereinrichtung 60 variieren, wie dies schematisch durch den frequenzvariablen Oszillator 62 (VFO), der über die Leitung 64 angeschlossen ist, deutlich wird.

Es ist zu beachten, daß die frequenzvariablen Bezugssignale auf Leitung 58, die zur gesteuerten Beschleunigung und Verzögerung des Bandes 12 nötig sind, nach einer von vielen bekannten Methoden erzeugt werden können. Beispielsweise kann ein rampenförmiges Beschleunigungssignal mit ansteigender Frequenz in der Einrichtung 60 selbst aufbereitet werden, und nicht mittels des externen Oszillators 62. Nebenbei wird bemerkt, daß die Schaltungsanordnung in Figur 1 keine Zeitbasiskorrekturkreise zeigt, die erforderlich werden können, um Bandgeschwindigkeitsschwankungen auszugleichen, die durch Variationen der Bandspannung oder andere Faktoren, z.B. Unregelmäßigkeiten des Bandtransportgerätes verursacht werden können.

Außer den Signalen auf Leitung 64, bei denen es sich im wesentlichen um Geschwindigkeitssteuersignale handelt, erzeugt die Steuereinrichtung 60 auch ein Motorsteuersignal (MDC) auf Leitung 66, die zum Steuerverstärker 22 führt, und erhält Vertikal-Synchronisiersignale vom Impulsabtrenner 48 über Leitung 52. Im Aufzeichnungsbetrieb erzeugt eine Videokamera 70 sowohl Video- als auch wahlweise Audiosignale (A) auf Leitung 72, die entsprechend moduliert und verarbeitet werden, wie dies mit Modulator 74 angedeutet ist, vor ihrer Übertragung auf Leitung 76 zum Schalter 40 und von dort zum Aufzeichnungs-/Wiedergabekopf 14. Bei de An- oder Abschaltung der Kamera 70 wird ein geeignetes Signal über eine Kameraschaltsignalleitung 78 der Steuereinrichtung 60 zugeführt, die den Motor 16 in Abhängigkeit von diesen Signalen steuert. Wie ferner noch beschrieben werden soll, liefert die Steuereinrichtung 60 auch ein Synchronisations-Nachstellsignal (RS) auf Leitung 80 an die Videokamera 70. Die Steuereinrichtung 60 erzeugt auch ein Aufzeichnungs-/Wiedergabesteuersignal R/PB C, wie bei 82 angedeutet, um die Schalter 26 und 40 zu steuern, sowie für andere Zwecke im Aufzeichnungssystem.

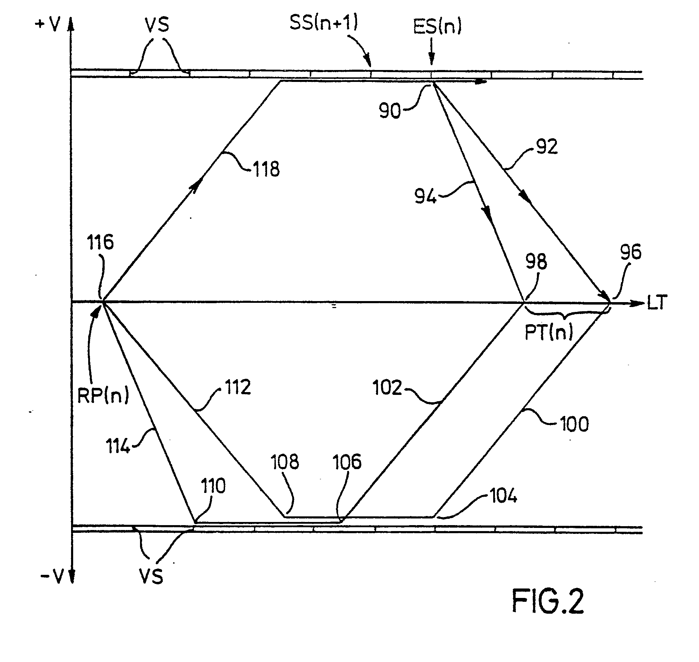

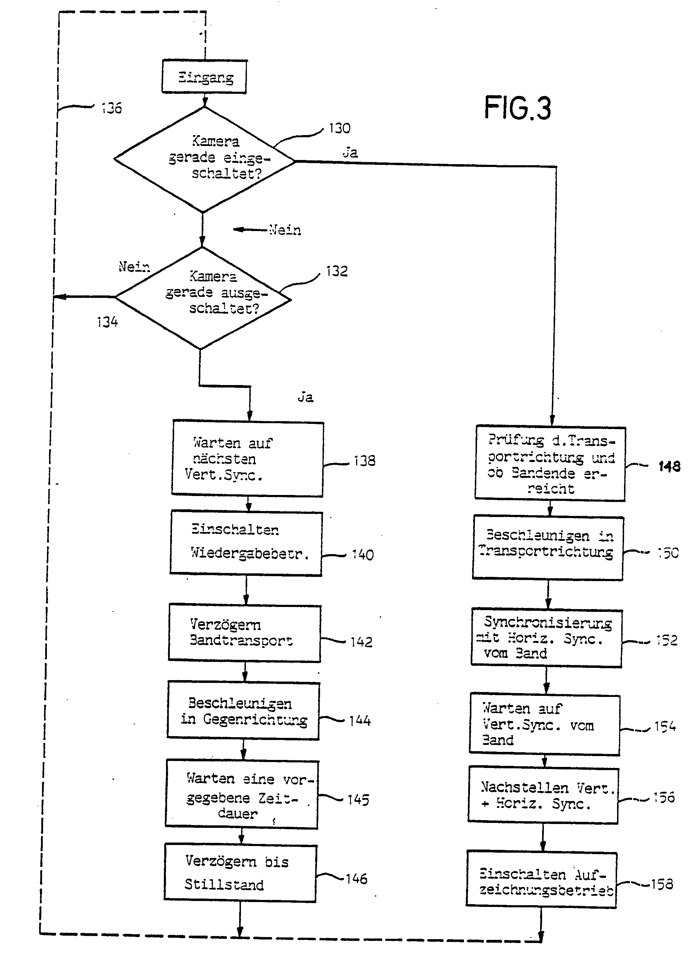

Es sei beachtet, daß in der Steuereinrichtung 60 zur Durchführung der eforderlichen Motorsteuerfunktionen eine fest verdrahtete Logikschaltung verwendet werden kann, teilweise bestimmt durch das Kameraschaltsignal (CSS) auf Leitung 78 und teilweise durch das Vertikal-Synchronisiersignal auf Leitung 52. Günster ist es jedoch, wenn die Steuereinrichtung 60 ein Mikrocomputer oder Mikroprozessor ist, da er in diesem Fall zur Durchführung weiterer, mit dem Aufzeichnungssystem verbundener Funktionen herangezogen werden kann. Ob die Steuereinrichtung 60 nun in fest verdrahteter oder in Mikroprozessor-Schaltungsform ausgeführt ist, die von ihm ausgeübten Funktionen sind identisch. Letztere sind im Flußdiagramm in Figur 3 in Verbindung mit dem Geschwindigkeits-/Bandpositionsdiagramm (V-LT) der Figur 2 definiert.

In Figur 2 kommen folgende Abkürzungen vor:

| | |
|---|---|
| +V/-V-Achse | Bandgeschwindigkeitsachse |
| LT-Achse | Bandpositionsachse |
| VS-Impulse | Vertikal-Synchronisierimpuls |
| $SS_{(n+1)}$-Punkt | Beginn der Szene n+1 |
| $ES_{(n)}$-Punkt | Ende der Szene n |
| $RP_{(n)}$-Punkt | Ruhelage nach Aufzeichnung der Szene n |
| $PT_{(n)}$-Punkt | Position des Bandes nach Verzögerung bei Beendigung der Szene n. |

In Figur 2 wird auf dem Aufzeichnungsband in Längsspuren von links nach rechts aufgezeichnet, d.h. das Band wird relativ zum sationären Aufzeichnungs-/Wiedergabekopf 14 von rechts nach links transportiert. Während eine Szene, angedeutet durch das Bezugszeichen n, aufgezeichnet wird, gibt das Kameraschaltsignal CSS auf Leitung 78 (Figur 1) an, daß der Kameraschalter betätigt ist und die Steuereinrichtung 60 erzeugt einen Steuerbefehl "Aufzeichnung" auf Leitung 82, der die Schalter 36 und 40 in der aufzeichnungsstellung R hält. Entsprechend wird eine Bezugsfrequenz gleich der Zeilenfrequenz $f_R$ an den Phasenvergleicher 20 geliefert und der Motor 16 auf Soll-Aufzeichnungsgeschwindigkeit in Vorwärtsrichtung (ursprüngliche Bandtransportrichtung) gesteuert.

5

**0 004 657**

Sobald zum Aufzeichnungsende der Kameraschalter freigegeben wird, gibt das Signal CSS auf Leitung 78 diese Information an die Steuereinrichtung 60 und löst dort einen Wartezustand aus, und beim Erfassen des nächsten auftretenden Vertikal-Synchronisierimpulses (VS) vom Band (siehe Bezugsziffer 90 in Figur 2) steuert die Steuereinrichtung 60 das Verzögern des Bandtransports bis zum Stillstand. Die Verzögerung erfolgt dadurch, daß auf Leitung 58 eine Reihe von Impulsen mit ständig abnehmender Frequenz erzeugt wird. Die Einrichtung 60 steuert auch den Schalter 36, so daß während des Beschleunigens als auch während des Verzögerns die von der Einrichtung 60 erzeugten frequenzvariablen Signale auf Leitung 58 (A/D) über Leitung 26 dem Eingang des Phasenvergleichers 20 Zugeführt werden. Da der Motor 16 in der Rückkopplungsschleife liegt, die den Tachometer 18, den Phasenvergleicher 20 und den Steuerverstärker 22 enthält, damit die Motordrehzahl der Impulsfrequenz der auf Leitung 26 an den Phasenvergleicher 20 gelegten Signale angeglichen wird, muß die Motordrehzahl sich annähernd linear verringern, wie dies dirch die Rampe (abfallende Kurvenzweig) 92 In Figur 2 angedeutet ist. Mit Hinblick auf sich ändernde Reibungseffekte beim Motor 16 und in der restlichen Bandtransporteinrichtung können der Motor und der Bandtransport jedoch auch schneller verzögert werden, siehe die steilere Rampe, die Kurvenzweig 94 zeigt. Auf jeden Fall verzögert sich der Bandtransport bis zum Stillstand des Bandes an einer Stelle zwischen oder in den Punkten 96 und 98, je nach den gegebenen Reibungseffekten.

Sobald der Bandtransport gestoppt ist, wird er in Richtung entgegen der ursprünglichen Transportrichtung beschleunigt, wie die Beschleunigungsrampen 100 und 102 zeigen. Der Grund für die zwei Kurvenzweige verschiedener Steigung liegt wiederum in den Reibungseffekten. Sobald das Band in der entgegengesetzten Richtung die Soll-Aufzeichnungsgeschwindigkeit erreicht hat, siehe Punkte 104 bzw. 106, wird es mit Aufzeichnungsgeschwindigkeit in dieser Richtung eine vorbestimmte Zeit lang transportiert, nämlich bis die Punkte 108 oder 110 erreicht sind. Danach wird das Band wiederum bis zum Stillstand verzögert, wie dies durch die Verzögerungsrampen 112 bzw. 114 angedeutet ist. Falls die Reibungsverhältnisse in der Gegenrichtung des Bandtransports denen in Vorwärtsrichtung (ursprünglicher Transportrichtung) entsprechen, muß das Band eine Ruhelage (siehe 116) $RP_{(n)}$ erreichen, die immer dieselbe sein wird, unabhängig davon, welcher der beiden Kurvenzweige durchlaufen wurde. Praktisch sind die in den beiden Bandtransportrichtungen gemessenen Reibungseffekte einander annähernd gleich und das Band erreicht auch praktisch annähernd dieselbe Ruhelage.

Wenn das Band die Ruhelage bei 116 (Figur 2) erreicht hat, bleibt es in dieser Lage, bis der Kameraschalter wiederum betätigt wird, um die Aufzeichnung die nächsten Szene einzuleiten. Wenn der Schaltvorgang festgestellt wird, wird der Bandtransport beschleunigt, wie mit der Beschleunigungsrampe 118 angedeutet. Sobald die Aufzeichnungsgeschwindigkeit in der Vorwärtsrichtung erreicht ist, wird der Steuereinrichtung 60 über die Leitung 52 die auf dem Band gespeicherte vertikale Synchronisierinformation in Form von Vertikal-Synchronisiersignalen zugeführt. Bei Erfassung des ersten oder eines der folgenden abgetasteten Vertikal-Synchronisiersignale wird die Vertikal-Synchronisierung der Kamera 70 nachgestellt, indem ein geeignetes Signal RS über die Leitung 80 an die Kamera 70 gegeben wird, wobei das Signal RS z.B. aus einer Koizidenzstufe der Steuereinrichtung 60 stammen kann. Gleichzeitig wird die Anordnung auf Aufzeichnungsbetrieb geschaltet, und die von der Kamera 70 erzeugte Videoinformation (nächstfolgende Szene) wird dann in Synchronisation mit der bereits aufgezeichneten Information (vorangehende Szene) aufgezeichnet. Ein oder mehrere Bilder der vorangegangenen Szene müssen während der Aufzeichnung der neuen Szene gelöscht werden, doch ist der Betrag an verlorener Information verhältnismäßig unbedeutend und während der Wiedergabe nicht wahrnehmbar. Der Löschvorgang kann beispielsweise dirch einen in Bandtransportrichtung gesehen vor dem Magnetkopf 14 angeordneten Löschkopf automatisch erfolgen.

Die obige Folge von Arbeitsfunktionen der Steuereinrichtung 60 ist im Flußdiagramm in Figur 3 dargestellt. Zu Beginn dieser Funktionsfolge findet zuerst eine Prüfung statt — siehe Block 130 —, um festzustellen, ob die Kamera 70 gerade eingeschaltet wurde. Ist dies nicht der Fall, wird eine Frage gestellt, um festzustellen, ob die Kamera 70 gerade ausgeschaltet wurde, wie in Block 132 angegeben. Ist dies nicht der Fall, dann hat, seit diese Fragen zum letzten Mal gestellt wurden, keine Änderung stattgefunden, und es wird ein Ausgangssignal bei 134 abgegeben. Es versteht sich, daß, falls die Steuereinrichtung 60 als Mikroprozessor ausgebildet ist, dieser bei Auftreten eines solchen Ausgangssignals nach beschriebener Funktionsfolge andere Funktionen haben kann, die mit der vorliegenden Erfindung nichts zu tun haben, und die durch die gestrichelte Linie 136 symbolisiert werden sollen, Wird im Block 132 festgestellt, daß die Kamera 70 gerade abgeschaltet wurde (Ausgangssignal JA), so bedeutet dies, daß die Aufzeichnung der gerade aufgezeichneten Szene zu beendigen ist. Nach Erfassung des zunächst auftretenden Vertikal-Sychronisierimpulses (Vert. Sync.), angedeutet im Block 138, wird die Einrichtung in den Wiedergabebetrieb geschaltet, siehe Block 140, und der Bandtransport wird bis zum stillstand verzögert, wie im Block 142 angedeutet. Danach wird der Bandtransport in der Gegenrichtung beschleunigt, wie im Block 144 angegeben, dann wird mit Aufzeichnungsgeschwindigkeit in der Gegenrichtung während einer vorbestimmten Zeit transportiert, also zurückgesetzt, wie im Block 145 mit "Wartezustand" angegeben, und wiederum bis zum Stillstand verzögert, wie im Block 146 angegeben. An diesem Punkt verbleibt das Band in der bei 116 in Figur 2

6

## 0 004 657

angegebenen Lage, und es braucht weiterhin nichts zu erfolgen, bis die Kamera 70 wiederum eingeschaltet wird.

Wenn das Kamera-Einschalten gerade stattfindet, wird dies im Block 130 erfaßt, wonach eine Prüfung hinsichtlich der momentanen Bandtransportrichtung stattfindet, und geprüft wird, ob das Bandende erreicht ist, wie im Block 148 angedeutet. Es wird daran erinnert, daß bei Videobandgeräten mit Längsspuraufzeichnung der hier betrachteten Art das Band in beiden Richtungen transportierbar ist, so daß die momentane Transportrichtung des Bandes festzustellen ist, bevor die Aufzeichnung einer neuen Szene eingeleitet werden kann. Ebenso müssen bei Annäherung des Bandendes Maßnahmen getroffen werden, um zu vermeiden, daß mit der Aufzeichnung mit einer neuen Szene zu nahe der Transportumkehr (Reversierung) des Bandes begonnen wird, obwohl die Wahrscheinlichkeit, daß dies eintritt, statistisch gering ist, ist es notwendig, eine derartige Prüfung vorzunehmen, um die Sicherheit der Szenenaufzeichnung nicht zu gefährden. Danach wird der Bandtransport bis zum Erreichen der Aufzeichnungsgeschwindigkeit beschleunigt, wie dies im Block 150 angedeutet ist, und die Bandtransporteinrichtung wird mit den vom Band auf Leitung 50 erhaltenen Horizontal-Synchronisiersignalen HS(T) synchronisiert, siehe Block 152. Letztere Funktion wird nicht über die Steuereinrichtung 60, sondern durch die Verbindung mit Figur 1 beschriebene Motordrehzahl-Regeleinrichtung oder Servoregelschleife durchgeführt. Die Synchronisierung mit den vom Band erhaltenen Horizontal-Sychronisiersignalen (Horiz. Sync.) nimmt lediglich einige Millisekunden in Anspruch. Danach wird ein erster oder einer der darauf folgenden Vertikal-Synchronisierimpulse VS(T) vom Band abgetastet und erfaßt, wie im Block 154 angedeutet, und zu diesem Zeitpunkt wird ein Nachstellimpuls RS an die Kamera 70 über die Synchronisier-Nachstelleitung 80 gesendet, wie im Block 156 angedeutet. Dabei kann sowohl der Vertikal- als auch der Horizontal-Synchronisierimpuls nachgestellt werden, bei Verwendung einer Videokamera als Videosignalquelle ist die Nachstellung des Vertikalimpulses ausreichend. Schließlich wird das System, im wesentlichen gleichzeitig mit der Erzeugung des Nachstellimpulses RS auf Leitung 80, in den Aufzeichnungszustand geschaltet, siehe Block 158, und damit ist diese Funktionssequenz beendet. Die Beschleunigung und die Synchronisierung beim Aufzeichnungsbeginn (vor Aufzeichnung) einer neuen Szene läßt sich innerhalb einiger 100 Millisekunden (msec) bewerkstelligen, wobei die Mindestzeitdauer bei etwa 240 msec liegen wird, bei der Annahme, daß die Verzögerungs- und Beschleunigungszeit des Bandtransports 40 msec beträgt und das Zurücksetzen um 2 Vollbilder erfolgt.

Obwohl die Steuereinrichtung 60 durch die Zeichnungen, die Beschreibung und das Flußdiagramm hinreichend offenbart erscheint, wird durch die an diese Beschreibung angefügte Liste eine noch ausführlichere Beschreibung geliefert. Diese Liste beinhaltet die Eingabe/Ausgabe-Pforten (ports)-Zuordnungen für einen F-8 Mikroprozessor, Typnummer 3870, z.B. hergestellt von der Mostek Corporation, Carrollton, Texas. Der Mikroprozessor dient als Steuereinrichtung 60, und die Angaben über die Pfortenzuordnungen werden benötigt, um die Geräte-Schnittstelle zwischen dem Mikroprozessor und den anderen, in Figur 1 gezeigten Teilen der Anordnung zu definieren. Eine komplette, sowohl in der Ursprungssprache als auch im Hexadezimalcode abgefaßte Aufstellung des im Mikroprozessor gespeicherten und ausgeführten Programms, einschließlich der Programme, die die Funktionen der Steuereinrichtung 60 durchzuführen erlauben, wird hier als überflüssig betrachtet und liegt für den Fachmann auf der Hand.

Aus obigen Ausführungen geht hervor, daß die Erfindung einen bedeutenden Fortschritt auf dem Gebiet der Videobandaufzeichnung darstellt. Insbesondere zeigt sie einen praktischen Weg zur Aufzeichnung aufeinanderfolgender Szenen auf ein Videoband ohne Synchronisationsfehler zwischen diesen Szenen bei Wiedergabe. Obwohl die Erfindung für die Anwendung bei der Aufzeichnung mehrfacher Szenen von einer Videokamera günstig ist, läßt sich dasselbe Verfahren auch leicht dem Aufzeichnungsvorgang für aufeinanderfolgende Programmteile aus anderen Videosignalquellen anpassen, z.B. für Fernsehprogrammteile, die direkt beim Empfang von der Antenne aufgezeichnet werden sollen. Es kann zum Beispiel vorteilhaft sein, Fernsehprogrammaterial zu verändern oder suzammenzuscheiden, indem das Videobandgerät während gewisser Teile eines Programms, die der Benutzer nicht aufzuzeichnen wünscht, gestoppt wird. Die "geschnittenen" Programmabschnitte könnten dann ohne Synchronisationsfehler zwischen den einzelnen Szenen wiedergegeben werden. Wenn die Videosignalquelle, aus der die Aufzeichnung entnommen wird, eine Fernsehsendung ist, so muß der Bandtransport sowohl mit dem Horizontal- als auch dem Vertikal-Sychronisiersignal, das aus der Videosignalquelle stammt, synchronisiert, werden, bevor das Gerät in den Aufzeichnungsbetrieb umgeschaltet wird.

Liste der Zuordungen für die Eingangs/Ausgangspforten des Mostek Modell F-8 Mikroprozessor

| Pforte | Stift-Nr. | Signalbezeichnung und -beschreibung | Typ |
|---|---|---|---|
| PO-0 | 3 | Rampe[1] | Ausgang |
| 1 | 4 | Umkehr (Band in der Umkehrphase) | Ausgang |
| 2 | 5 | Volle Zählung (Band beschleunigen) | Ausgang |
| 3 | 6 | Herunterzählung (Band verzögern) | Ausgang |
| 4 | 19 | Vorwärts (Bandtransportrichtung) | Ausgang |

7

| Pforte | Stift-Nr. | Signalbezeichnung und -beschreibung | Typ |
|---|---|---|---|
| 5 | 18 | Vorwärtstransport wirksam schalten (Moterregelung)[2] | Ausgang |
| 6 | 17 | Vorwärtslauf wirksam schalten (Motorsteuerung)[2] | Ausgang |
| 7 | 16 | Zählwert Null (Bandstillstand) | Ausgang |
| P1-0 | 37 | Leitspindel vorwärts (bezeiht sich auf Band-laden und -entladen) | Ausgang |
| 1 | 36 | Leitspindel vorwärts (bezieht sich auf Band-Lade-/Entladevorgang) | Ausgang |
| 2 | 35 | Schrittschalter vorwärts (Steuerung der momentanen Bandspur) | Ausgang |
| 3 | 34 | Schrittschalter vorwärts (Steuerung der momentanen Bandspur) | Ausgang |
| 4 | 22 | Wiedergabe | Ausgang |
| 5 | 23 | Bereitschaft (bezeiht sich auf den Band-Lade-/Entladevorgang) | Ausgang |
| 6 | 24 | Aufzeichnung[3] | Ausgang |
| 7 | 25 | Schnelles Entladen | Ausgang |
| P4-0 | 8 | Anzeigeverriegelung (in Verbindung mit den Anzeigeausgängen verwendet) | Ausgang |
| 1 | 9 | Lochentdeckung (Bandmarkeirung am Bandende) | Ausgang |
| 2 | 10 | Umkehrmarkierung (auf dem Band aufgezeichnet) | Ausgang |
| 3 | 11 | Vertikal-Synchronisierimpuls[4] | Ausgang |
| 4 | 12 | Spurende (bezeiht sich auf den Kopfpositions-schrittschalter zur Spurauswahl) | Ausgang |
| 5 | 13 | Ungerade Spur (bezieht sich auf den Kopfpositionsschrittschalter zur Spurauswahl) | Ausgang |
| 6 | 14 | Irrtum (bezieht sich auf den Kopfpositionsschritt-Schalter zur Sourauswahl) | Ausgang |
| 7 | 15 | Richtung (bezieht sich auf den Kopfpositions-Schrittschalter zur Spurauswahl) | Ausgang |
| P5-0 | 33 | DS 1 (Anzeigesteuersignal und Schalterein-blendungssignal — s. Anm. 5) | |
| 1 | 32 | DS 2 (Anzeigesteuersignal und Schalterein-blendungssignal — s. Anm. 5) | |
| 2 | 31 | DS 3 (Anzeigesteuersignal und Schalterein-blendungssignal — s. Anm. 5) | |
| 3 | 30 | DS 4 (Anzeigesteuersignal und Schalterein-blendungssignal — s. Anm. 5) | |
| 4 | 29 | SW 1 (Eingangsschalter — s. Anm. 5) | Eingang |
| 5 | 28 | SW 2 (Eingangsschalter — 2. Anm. 5) | Eingang |
| 6 | 27 | SW 3 (Eingangsschalter — s. Anm. 5) | Eingang |
| 7 | 26 | SW 4 (Eingangsschalter — s. Anm. 5) | Eingang |

| Einblen-dungssignal | SW 1 | SW 2 | SW 3 | SW 4 |
|---|---|---|---|---|
| DS 1 | BOT[6] | EOT[5] | BOL+EOL[7] | Kontakt[8] |
| DS 2 | Stationärer Teil | Zeitgeber | | |
| DS 3 | — | Rücksetzen[11] | Aufzeichnung[11] | Wiedergabe[11] |
| DS 4 | Stopp[11] | Beschleunigen[12] | Verzögern[12] | Laden/-Entladen[12] |

Darin bedeuten:

BOT   Bandanfang
EOT   Bandende
BOL   Vorspannbandanfang
EOL   Vorspannbandende

Erläuterungen

1. Das "Rampensignal" Schaltet den variablen Oszillator G2 (Figur 1) in die nächste Betriebsphase bei einer höheren oder niedrigeren Frequenz.

2. Hier Handelt es sich um die Transportrichtungssteuersignale für den Motor auf Leitung 66 (Figur 1).

3. Hier handelt es sich um die Aufzeichnungs-/Wiedergabesignale (R/PB C) auf Leitung 82 (Figur 1). Das Aufzeichnungssignal dient auch dazu, einen Synchronisations-Nachstellimpuls zu erzeugen, wie dies auf Leitung 80 (Figur 1) angedeutet ist.

4. Dies ist das Vertikal-Synchronisiersignal, das auf Leitung 52 (Figur 1) erhalten wird.

5. Die Schalter S1—S4 werden mittels stroboskopischer Signale DS1—DS4 mehrfach in die Steuereinrichtung eingegeben. Die Bedeutung der Schalter geht aus obiger Tabelle hervor.

6. Bandanfang (BOT) und Bandende (EOT).

7. Anfang (oder Ende) der Leitspindelbewegung (bezieht sich auf Laden/Entladen des Bandes).

8. Band in Berührung mit der Antriebsrolle.

9. Gibt an, ob das Bandgerät vom Netzteil (Wechselstromnetz) oder als "tragbares" Gerät (portable) mit einer Videokamera arbeitet.

10. Manueller Schalter für zeitlich begrenzte Aufzeichnung.

11. Manuelle Schalter zur Steuerung des Bandgerätes. Wird letzteres als "tragbares" Gerät betrieben (s. 9), dient der Aufzeichnungs-(Record)-Schalter als Kameraschalter.

12. Manuelle Schalter für die Spurauswahl und Laden/Entladen des Bandes, hier in einer Bandkassette.

## Patentansprüche

1. Verfahren zur Aufzeichnung von Videosignalen mit einem Videorekorder, in dem in Längsspuren auf Magnetband aufgezeichnet wird und nach Durchlauf einer ersten Spur in einer Richtung der Bandtransport bis zum Stillstand verzögert und in Gegenrichtung wieder beschleunight wird, wobei eine Folge von zeitlich beabstandeten Video-Szenen vorliegen, die von einer Videosignalquelle, insbesondere einer Videokamera, stammen, und die aufgezeichneten Videosignale ohne Bandkapazitäts- und Synchronisationsverlust wiedergebbar sein sollen, durchgeführt mit folgenden Verfahrensschritten:
Verzögern des Bandtransports bis zum Stillstand des Bandes nach erfolgter Aufzeichnung einer Szene in der dazugehörigen Bandtransportrichtung; Zurücksetzen des Bandes um eine vorbestimmte Strecke; Beschleunigen des Bandtransports auf Aufzeichnungsgeschwindigkeit in der dazugehörigen Bandtransportrichtung; Abtasten der Horizontal- und Vertikal-Synchronisiersignale vom Band; Synchronisieren des Bandtransports in Abhängigkeit von den vom Band abgetesteten Horizontal-Synchronisiersignalen mit den Bezugs-Horizontal-Synchronisiersignalen durch Phasenvergleich beider Synchronisiersignale; Synchronisierung der Vertikal-Sychronisiersignale vom Band mit denen der Videosignalquelle; Umschalten der Aufzeichnungseinrichtung in den Betriebszustand zur Aufzeichnung der nächstfolgenden Szene, Erfassen der Istdrehzahl des Bandtransports über ein Tachosignal, dadurch gekennzeichnet, daß die Schritte Verzögern des Bandtransports zum Stillstand und Beschleunigung in Gegenrichtung durch Erzeugen eines frequenzvariablen Signals erfolgen, das beim Bescheunigen aus dem Stillstand zwischen einem Mindest- und einem Höchstfrequenzwert erhöht und beim Verzögern entsprechend vermindert wird, und daß über das frequenzvariable Signal durch Phasenvergleichen mit dem vom Bandtransport erzeugten Tachosignal und Regeln der Bandtransportgeschwindigkeit über das Differenzsignal eine vom frequenzvariablen Signal abhängige Bandtransportgeschwindigkeit eingestellt wird.

2. Verfahren nach Anspruch 1, dadurch gekennzeichnet, daß das Synchronisieren des Bandtransports die Rückstellung der Vertikal-Synchronimpulse der Videosignalquelle umfaßt, damit letztere mit den vom Band abgetasteten Vertikal-Synchronisierimpulsen in Übereinstimmung kommen.

3. Verfahren nach Anspruch 1 oder 2, gekennzeichnet durch Einschalten des Videorekorders in den Aufzeichnungsbetrieb, wenn die aufzuziechnende Video-Szene mit der zuletzt aufgezeichneten Video-Szene in Synchronisation ist.

4. Anordnung zur Durchführung des Verfahrens gemäß Ansprüchen 1 bis 3, enthaltend eine Transporteinrichtung zum Längstransport des Bandes entland einem Aufzeichnungs-/Wiedergabemagnetkopf, die einen Antriebsmotor aufweist und Motordrehzahl-Regeleinrichtungen, um die Motor- und Bandgeschwindigkeit in Abhängigkeit von Bezugssignalen zu regeln, gekennziechnet durch die folgenden Schaltungen:
Gerätesteuereinrichtungen (60) für die Bandtransporteinrichtung (10), die Motordrehzahl-Regeleinrichtung (18, 20, 22) und für die Bereitstellung geeingneter Oszillatorsignale für die Motordrehzahl-Regeleinrichtung (18, 20, 22), damit die Schritte Verzögern und Rücksetzen des Bandes (12) am Aufzeichnungsende einer Szene und zum Bescheunigen am Aufzeichnungsbeginn der nächstfolgenden Szene gesteuert werden,
Einrichtungen (44, 48) um die Synchronisiersignale (HS(T), VS(T)) vom Band zu erhalten,
Gleichlaufeinrichtungen zur Synchronisierung der Bandtransporteinrichtung (10) mit den Synchronisiersignalen der Videosignalquelle (70) mittels der vom Band (12) erhaltenen Synchronisiersignale (HS(T)),
Schalteinrichtungen (36, 40), die über die Gerätesteuereinrichtungen (60) gesteuert werden, zum Schalten in den Aufzeichnungsbetrieb, wenn der Bandtransport mit der Videosignalquelle (70) voll synchronisiert ist.

5. Anordnung nach Anspruch 4, dadurch gekennzeichnet, daß die Gleichlaufeinrichtungen folgende Einheiten enthalten: eine Vergleichsschaltung zum Vergleich der vom Band (12) erhaltenen Horizontal-Synchronisiersignale (HS(T)) mit den durch eine unabhängige Bezugsfrequenz ($f_R$) erzeugten und der Steuerung der Videosignalquelle dienenden Horizontal-Synchronisiersignalen und Nachstell-Einrichtungen, die bei Erfassen eines vom Band (12) abgetasteten Vertikal-Synchronisiersignals (VS(T)) die Vertikal-Synchronisation der Videosignalquelle (70) nachstellen.

6. Anordnung nach den Ansprüchen 4 oder 5, dadurch gekennzeichnet, daß die Motordrehzahl-Regeleinrichtungen einen Rückkopplungskreis enthalten, der einen mit dem Motor gekoppelten Tachometer (18), einen Phasenvergleicher (20) zum Vergleichen des Oszillatorsignals mit einem von Tachometer (18) erzeugten Signal und zum Erzeugen eines Differenzsignals und eine Motor-steuerstufe (22) zur Steuerung der Motordrehzahl in Abhängigkeit vom Diffrenzsignal umfaßt.

7. Anordnung nach Ansprüchen 4 oder 6, dadurch gekennzeichnet, daß während der Schritte Bescheunigen und Verzögern das dem Phasenvergleicher (20) zugeführte Oszillatorsignal von der Gerätesteuereinrichtung (60) geliefert wird und daß das Oszillatorsignal im Aufzeichnungsbetrieb (R) von einer Bezugsfrequenz ($f_R$) und im Wiedergabebetrieb (PB) von der Vergleichsschaltung (54) für die Horizontal-Synchronisiersignale abgeleitet wird.

8. Anordnung nach einem der Ansprüche 3—6, dadurch gekennzeichnet, daß die Vergleichsschaltung (54) für die Horizontal-Synchronisiersignale (HS) einen zweiten Phasenvergleicher (54) enthält, der ein Differenzsignal (ES) aus dem Phasenvergleich bereitstellt und ein variabler Oszillator (56) zur Erzeugung eines Oszillatorsignals vorgesehen ist, das zum Teil von letzterem Differenzsignal abhängig ist.

## Revendications

1.— Procédé d'enregistrement de signaux vidéo avec un enregistreur vidéo lequel l'enrigstrement est effectué sur bande magnétique en pistes longitudinales et, après passage d'une première piste dans un sens, le défilement de la bande est ralenti jusqu'à l'arrêt et ré-accéléré dan l'autre sens, une suite de scènes vidéo étant espacées dans le temps et provenant d'une source de signaux vidéo, en particulier d'une caméra vidéo, et les signaux vidéo enregistrés devant pouvoir être lus sans perte de capacité de la band ni de synchronisation, procédé comportant les phases suivantes: ralentissement du défilement de la band jusqu'à l'arrêt après l'enregistrement d'une scène dans le sens de défilement de la bande correspondant; retour en arrière de la bande sur unde longueur déterminée; accélération du défilement de la bande jusqu'à la vitesse d'enregistrement dans le sens correspondant; lecture sur la bande des signaux de synchronisation horizontale et de synchronisation verticale; synchronisation du défilement de la bande en fonction des signaux de synchronisation horizontale lus sur elle aves les signaux de synchronisation horizontale de référence par comparaison des phases des deux signaux de synchronisation; synchronisation des signaux de synchronisation verticale de la bande avec ceux de la source de signaux vidéo; passage en enregistrement du dispositif d'enregistrement pour l'enregistrement de la scène suivante, détection de la vitesse effective de défilement de la bande par l'intermédiaire d'un signal tachymerique, caractérisé par le fait que les phases de ralentissement du défilement de la band jusqu'à l'arrêt et d'accélération dans l'autre sens s'opèrent par production d'un signal de fréquence variable augmentant entre un minimum et un maximum lors de l'acclélération à partir de l'arrêt et diminuant de façon correspondante lors du ralentissement, et qu'une vitesse de défilement dépendant de ce signal de fréquence variable est donnée à la bande par comparaison des phases de ce signal et du signal tachymétrique produit par le défilement de la bande et réglage de la vitesse de défilement de la bande par l'intermédiaire du signal d'erreur.

2.— Procédé selon la revendication 1, caractérisé par le fait que la synchronisation du défilement de la bande comprend le rappel des impulsions de synchronisation verticale de la source de signaux vidéo afin que celles-ci veinnent en concordance avec les impulsions de synchronisation verticale lues sur la bande.

3.— Procédé selon la revendication 1 ou 2, caractérisé par le passage de l'enregistreur vidéo en enregistrement quand la scène vidéo à enregistrer est synchronisée avec la scène vidéo enregistrée en dernier lieu.

4.— Dispositif pour l'application du procédé selon les revendications 1 à 3, comportant un dispositif d'entraînement destiné à faire défiler la bande longitudinalement devant une tête magnétique d'enregistrement et de lecture, et qui comporte un moteur d'entraînement et des dispositifs de régulation de la vitesse du moteur pour régler la vitesse du moteur et celle de la bande en fonction de signaux de référence, caractérisé par les circuits suivants:

— moyens de commande d'appareil (60) pour le dispositif (10) d'entraînement de la bande et le dispositif (18, 20, 22) de régulation de la vitesse du moteur et pour la production de signaux d'oscillateur appropriés pour le dispositif (18, 20, 22) de régulation de la vitesse du moteur, afin que les phases de ralentissement et de retour en arrière de la bande (12) soient commandées à la

**0 004 657**

fin de l'enregistrement d'une scène et pour l'accélération au début de l'enregistrement de la scène suivante,

— dispositifs (44, 48) pour la lecture des signaux de synchronisation (HS(T), VS(T)) de la bande,

— dispositifs de synchronisation du dispositif (10) d'entraînement de la bande avec les signaux de synchronisation de la source de signaux vidéo (70) au moyen des signaux de synchronisation (HS(T)) lus sur la bande (12),

— dispositifs de commutation (36, 40) commandés par les dispositifs de commande d'appareil (60) et destinés au passage en enregistrement quand le défilement de la bande est parfaitement synchronisé avec la source de signaux vidéo (70).

5.— Dispositif selon la revendication 4, caractérisé par le fait que les dispositifs de synchronisation contiennent les éléments suivants; un circuit comparateur destiné à comparer les signaux de synchronisation horizontale (HS(T)) lus sur la bande (12) avec les signaux de synchronisation horizontale produits par une fréquence de référence indépendante ($f_R$) et servant à la commande de la source de signaux vidéo, et des dispositifs d'adjustement qui, à la détection d'un signal de synchronisation verticale (VS(T)) lu sur la bande, adjustent la synchronisation verticale de la source de signaux vidéo (70).

6.— Dispositif selon la revendication 4 ou 5, caractérisé par le fait que les dispositifs de régulation de la vitesse du moteur contiennent un circuit de réaction que comprend un tachymètre (18) accouplé au moteur, un comparateur de phases (20) destiné à comparer le signal d'oscillateur avec un signal produit par ce tachymètre (18) et à produire un signal d'erreur, et un étage (22) de commande de la vitesse du moteur en fonction de ce signal d'erreur.

7.— Dispositif selon la revendication 4 ou 6, caractérisé par le fait que, pendant les phases d'accélération et de ralentissement, le signal d'oscillateur envoyé au comparateur de phases (20) est fourni par le dispositif de commande d'appareil (60), et que le signal d'oscillateur est tiré, en enregistrement (R), d'une fréquence de référence ($f_R$) et, en lecture (PB), du circuit comparateur (54) des signaux de synchronisation horizontale.

8.— Dispositif selon l'une des revendications 3 à 6, caractérisé par le fait que le circuit comparateur (54) des signaux de synchronisation horizontale (HS) contient un deuxième comparateur de phase (54) qui produit un signal d'erreur (ES), et qu'il est prévu un oscillateur variable (56) destiné à produire un signal dépendant en partie du dernier signal d'erreur.

## Claims

1. A method of recording video signals with a video recorder in which the signals are recorded in longitudinal tracks on magnetic tape and, after the passage of a first track in one direction, the tape transport is decelerated to a stop and accelerated again in the opposite direction, there being a sequence of time-spaced scenes of video information originating from a source of video signals, particularly a video camera, and it being essential that the recorded video signals should be capable of being reproduced without loss of tape capacity and synchronization, comprising the following procedural steps: decelerating the tape transport until the tape stops after recording a scene in the appropriate tape transport direction; backspacing the tape for a predetermined distance; accelerating the tape transport to recording speed in the appropriate direction; reading horizontal and vertical synchronization signals from the tape; synchronizing, the tape transport, in dependence on the horizontal synchronization signals read from the tape, with the reference horizontal synchronization signals by comparison of the phases of the two synchronization signals; synchronizing the vertical synchronization from the tape with those of the video signal source; switching the recorder to the mode for recording the next scene; and detecting the actual speed of the tape transport via a tachometer signal, characterized in that the steps of decelerating the tape transport to a stop and of accelerating it in the opposite direction are effected by generating a variable-frequency signal which, during acceleration from a standstill, increases in frequency from a minimum to a maximum value and, during deceleration, is correspondingly decreased in frequency, and that a tape transport speed, dependent on the variable-frequency signal, is set via the variable-frequency signal by comparison of its phase with that of the tachometer signal generated by the tape transport, and adjustment of the tape transport speed via the difference signal.

2. A method as claimed in claim 1, characterized in that the synchronization of the tape transport includes resetting of the vertical synchronization pulses of the video signal source, so that such pulses are brought into accord with the vertical synchronization pulses read from the tape.

3. A method as claimed in claim 1 or 2, characterized by the switching on of the video recorder to the recording mode if the scene of video information to be recorded is in synchronization with the last-recorded scene of video information.

4. An apparatus for carrying out the method as claimed in claims 1 to 3, comprising transport means for transporting the tape longitudinally past a record/playback magnetic head, which means has a drive motor and motor speed regulation means for controlling the motor and tape speeds in dependence on reference signals, characterized by the following circuits:

recorder control means (60) for controlling the tape transport means (10) and the motor speed

11

regulation means (18, 20, 22), and for providing appropriate oscillatory signals for the motor speed regulation means (18, 20, 22) to effect control of the steps of decelerating and back-spacing of the tape at the end of recording a scene, and acceleration of the tape at the beginning of recording the next scene,

means (44, 48) for obtaining synchronization signals (HS(T), VS(T)) from the tape,

means for synchronizing the tape transport means (10) with the synchronization signals from the video signal source (70) by means of the synchronization signals (HS(T)) derived from the tape (12), and

switches (36, 40), which are controlled via the recorder control means (6), for switching to the recording mode when the tape movement is fully synchronized with the video signal source (70).

5. An apparatus as claimed in claim 4, characterized in that the means for synchronizing tape movement contains the following units:

A comparator circuit for comparing the horizontal synchronization signals (HS(T)), obtained from the tape (12), with the horizontal synchronization signals generated by an independent reference frequency ($f_R$) and serving to control the video signal source; and resetting means which, upon detection of a vertical synchronization signal (VS(T)) derived from the tape (12), reset vertical synchronization of the video signal source (70).

6. An apparatus as claimed in claim 4 or 5, characterized in that the motor speed regulation means contains a feedback circuit comprising a tachometer (18) coupled to a motor, a phase comparator (20) for comparing the oscillatory signal with a signal generated by the tachometer (18), and for generating a difference signal, and motor control means (22) for controlling the motor speed in dependence on the difference signal.

7. An apparatus as claimed in claim 4 or 6, characterized in that, during the acceleration and deceleration steps, the oscillatory signal input to the phase comparator (20) is supplied by the recorder control means (60), and that, in the recording mode (R), the oscillatory signal is derived from a reference frequency ($f_R$) and, in the playback mode (PB), from the circuit (54) for comparing the horizontal synchronization signals.

8. An apparatus as claimed in any of claims 3 to 6, characterized in that the circuit (54) for comparing the horizontal synchronization signals (HS) contains a second phase comparator (54) which generated a difference signal (ES) from the comparison of the phases, and that a variable oscillator (56) is provided for generating an oscillatory signal which is in part dependent on the said difference signal.

FIG.1

FIG.2

2

# FIG.3

```
Eingang
```
— 136

Kamera gerade einge- schaltet? — 130    Ja →

← Nein

Kamera gerade ausge- schaltet? — 132
Nein ←
134

Ja

| Warten auf nächsten Vert.Sync. — 138 | Prüfung d.Transportrichtung und ob Bandende erreicht — **148** |
| Einschalten Wiedergabebetr. — 140 | Beschleunigen in Transportrichtung — 150 |
| Verzögern Bandtransport — 142 | Synchronisierung mit Horiz. Sync. vom Band — 152 |
| Beschleunigen in Gegenrichtung — 144 | Warten auf Vert.Sync. vom Band — 154 |
| Warten eine vor- gegebene Zeit- dauer — 145 | Nachstellen Vert. + Horiz. Sync. — 156 |
| Verzögern bis Stillstand — 146 | Einschalten Auf- zeichnungsbetrieb — 158 |